# EUROPEAN PATENT APPLICATION

(11) **EP 4 344 955 A1**
(43) Date of publication of application: **03.04.2024**
(21) Application number: 23193623.8
(22) Date of filing: 28.08.2023
(51) Int. Cl.: B60R 7/04

(54) **OBJECT SUPPORT**

(30) Priority: 22.09.2022 US 202263409063 P
(71) Applicant: Apple Inc., Cupertino, CA 95014 (US)
(72) Inventor: EDGETTE, Christopher S., Cupertino, 95014 (US); SEDLACEK, Mikael P., Cupertino, 95014 (US); WOLF, Philipp J., Cupertino, 95014 (US)
(74) Representative: Zacco Denmark A/S

(57) **Abstract**

An object support includes an object receiving portion extending from a panel and configured to support an object, with the object receiving portion configured to move relative to an interior surface between a first position when the panel is in a closed position and a second position when the panel is in an open position. The object receiving portion is closer to a lateral surface of the panel in the second position than the first position.

## Description

### TECHNICAL FIELD

This disclosure relates generally to the field of object supports.

### BACKGROUND

Some devices provide hooks to support an object. The hooks are typically fixed to a stationary portion of the device.

### SUMMARY

One aspect of the disclosure is a door system for selectively covering an opening of a vehicle. The door system includes a door configured to move between a closed position, in which the door is configured to be disposed within the opening of the vehicle, and an open position, in which the door is configured to be spaced from the opening of the vehicle. The door includes an interior surface configured to face an interior of the vehicle in the closed position, an exterior surface configured to face an exterior of the vehicle in the closed position, and a lateral surface that extends between the interior surface and the exterior surface and spaced from the opening of the vehicle in the open position. The door system includes an object receiving portion extending from the door and configured to support an object, with the object receiving portion configured to move relative to the interior surface between a first position when the door is in the closed position and a second position when the door is in the open position. The object receiving portion is closer to the lateral surface in the second position than the first position.

In some implementations of the door system, the object receiving portion is configured to translate relative to the interior surface between the first position and the second position.

In some implementations of the door system, the object receiving portion extends outwardly from the interior surface in the first position and the object receiving portion extends outwardly from the lateral surface in the second position.

In some implementations of the door system, the object receiving portion is configured to rotate to move the object receiving portion between the interior surface and the lateral surface.

In some implementations of the door system, the door includes a rail disposed within the door, with the object receiving portion slidably coupled to the rail and configured to translate relative to the interior surface.

In some implementations of the door system, the object receiving portion is rotatably coupled to door at a pivot point between the interior surface and the exterior surface, with the object receiving portion configured to pivot about the pivot point as the object receiving portion moves between the first position and the second position.

In some implementations of the door system, the door system further comprises an actuator disposed within the door and coupled to the object receiving portion, with the actuator configured to move the object receiving portion between the first position and the second position.

In some implementations of the door system, the door system further comprises a controller in communication with the actuator and an input in communication with the controller, with the input configured to send an input signal to the controller and with the controller configured to send an output signal to the actuator to command the actuator to move the object receiving portion between the first position and the second position.

In some implementations of the door system, the door system further comprises a door release configured to be manipulated by a passenger to facilitate movement of the door from the closed position to the open position, with the door release coupled to the object receiving portion and configured to move the object receiving portion from the first position to the second position.

In some implementations of the door system, the door system further comprises a magnet coupled to the object receiving portion and configured to magnetically retain the object to the object receiving portion.

In some implementations of the door system, the door system further comprises a case comprising a magnet having a first polarity. The object receiving portion comprises a ferrous material or a magnetic material having a second polarity, opposite the first polarity, with the case configured to be magnetically retained to the object receiving portion.

Another aspect of the disclosure is a door system for selectively covering an opening of a vehicle. The door system includes a door comprising an interior surface configured to face an interior of the vehicle and an exterior surface configured to face an exterior of the vehicle. The door system includes an object receiving portion extending from the door and configured to support an object, with the object receiving portion configured to move relative to the interior surface between a first position and a second position. The door system includes an actuator coupled to the object receiving portion and configured to move the object receiving portion between the first position and the second position.

In some implementations of the door system, the door system further comprises a controller in communication with the actuator and an input in communication with the controller, with the input configured to send an input signal to the controller and with the controller configured to send an output signal to the actuator to command the actuator to move the object receiving portion between the first position and the second position.

In some implementations of the door system, the input includes a selection surface configured to be contacted by a passenger to send the input signal to the controller.

In some implementations of the door system, the object receiving portion is configured to translate relative to the interior surface between the first position and the second position.

In some implementations of the door system, the door includes a rail disposed within the door, with the object receiving portion slidably coupled to the rail and configured to translate relative to the interior surface.

Another aspect of the disclosure is a vehicle including a body defining an interior. The vehicle includes an interior surface disposed within the interior and an object receiving portion extending into the interior and configured to support an object, with the object receiving portion configured to move relative to the interior surface between a first position and a second position. The vehicle includes an actuator coupled to the object receiving portion and configured to move the object receiving portion between the first position and the second position.

In some implementations of the vehicle, the vehicle further comprises a door movably coupled to the body, with the door at least partially comprising the interior surface such that the object receiving portion moves relative to the door between the first position and the second position.

In some implementations of the vehicle, the vehicle further comprises a controller in communication with the actuator and an input in communication with the controller, with the input configured to send an input signal to the controller and with the controller configured to send an output signal to the actuator to command the actuator to move the object receiving portion between the first position and the second position.

In some implementations of the vehicle, the input includes a selection surface configured to be contacted by a passenger to send the input signal to the controller.

### BRIEF DESCRIPTION OF THE DRAWINGS

FIGS. 1 A and 1B are schematic top view illustrations of a vehicle comprising a door system.
FIGS. 2A and 2B are schematic side view illustrations of an example implementation of the door system.
FIGS. 3A and 3B are schematic perspective view illustrations of an example implementation of the door system.
FIG. 4 is a schematic side view illustration of an example implementation of the door system.
FIG. 5 is a schematic side view illustration of an example implementation of the door system.
FIGS. 6A and 6B are schematic perspective view illustrations of an example implementation of the door system.
FIGS. 7A and 7B are schematic perspective view illustrations of an example implementation of the door system.
FIG. 8 is a schematic top view illustration of an example implementation of the door system.
FIG. 9 is a schematic top view illustration of an example implementation of the door system.
FIG. 10 is a schematic side view illustration of an example implementation of the vehicle.
FIG. 11 is a schematic side view illustration of an example implementation of the vehicle.

### DETAILED DESCRIPTION

This disclosure is directed to a door system of a vehicle that has an object receiving portion that supports an object.

Typical vehicles provide various storage options for objects. The vehicles may provide storage compartments within doors or hooks fixed to a pillar or a roof of the body of the vehicle. The storage compartments, hooks, and other storage options are stationary. To access the storage options, the passenger must carry the object into the vehicle and place the object in the designated location within the vehicle.

The vehicles described herein utilize a door system having an object receiving portion for supporting the object and is configured to move on the door to position the object relative to the vehicle depending on the passenger's desire to access the object. The object receiving portion is configured to be positioned on the door within a path of passenger during ingress/egress to facilitate loading of the object. Once the passenger is seated in the vehicle, the object receiving portion moves to another location on the door to comfortably store the object within the interior of the vehicle.

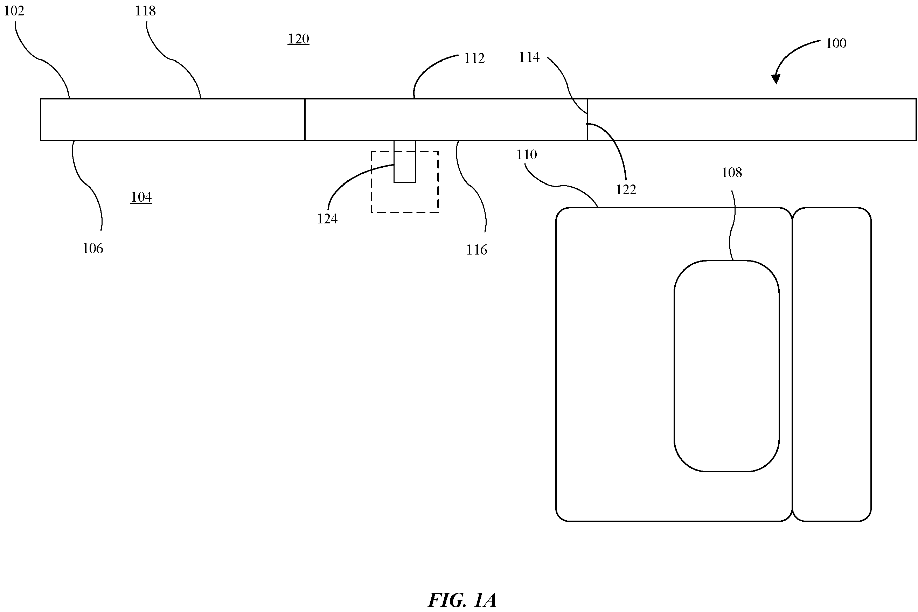

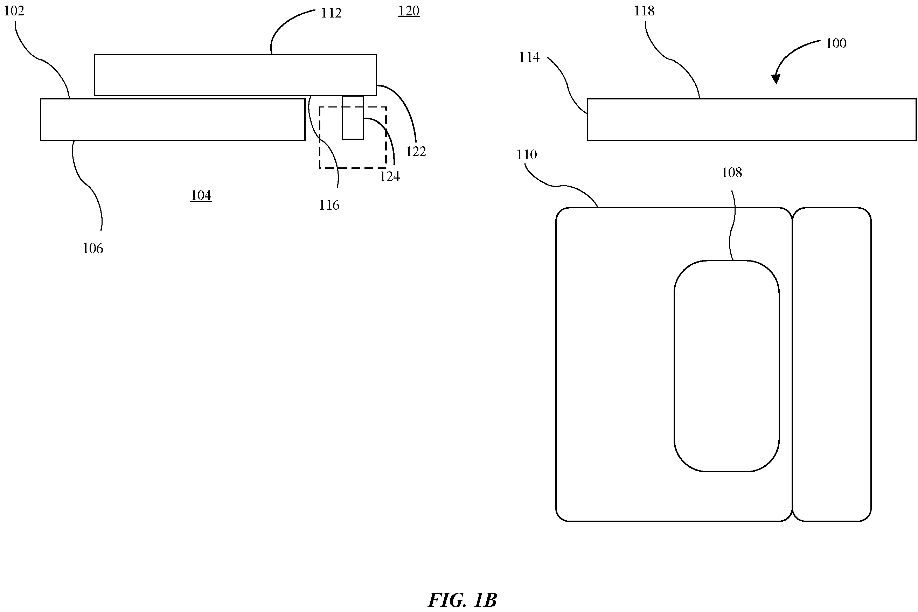

FIGS. 1A and 1B are schematic top view illustrations of a vehicle 100. The vehicle 100 includes a body 102 that defines an interior 104. The interior 104 may comprise a passenger 108 cabin. The body 102 comprises an interior surface 106 disposed within the interior 104. The vehicle 100 may be a road-going vehicle that is supported by wheels and is able to travel freely upon roadways and other surfaces. A passenger 108 (e.g., at least one passenger) may travel in the vehicle 100 within the interior 104. The vehicle 100 may comprise a seat 110 (e.g., at least one seat) mounted to the body 102 within the interior 104 and configured to support the passenger 108 seated thereon.

The vehicle 100 includes a door system 112 for selectively covering an opening 114 of the vehicle 100. The door system 112 comprises a door 116 movably coupled to the body 102. The door 116 is configured to move between a closed position (as shown in FIG. 1A), in which the door 116 is configured to be disposed within the opening 114 of the vehicle 100, and an open position (as shown in FIG. 1B), in which the door 116 is configured to be spaced from the opening 114 of the vehicle 100. The door 116 shown in the Figures is configured to slide along the body 102 of the vehicle 100 between the closed position and the open position. However, the door 116 may pivot between the closed position and the open position or move in any other suitable manner.

The door 116 at least partially comprises the interior surface 106. The interior surface 106 of the door 116 is configured to face the interior 104 of the vehicle 100 in the closed position. The door 116 further includes an exterior surface 118 configured to face an exterior 120 of the vehicle 100 in the closed position. The exterior surface 118 of the door 116 and the interior surface 106 of the door 116 extend generally in the longitudinal and elevational directions of the vehicle and are spaced laterally from each other. The door system 112 includes a lateral surface 122 that extends between the interior surface 106 and the exterior surface 118 and spaced from the opening 114 of the vehicle 100 in the open position. The lateral surface 122 is transverse to the interior surface 106 and the exterior surface 118 and forms a portion of the periphery of the door 116. The lateral surface 122 is exposed in the open position and hidden in the closed position by the body 102 defining the opening 114.

The door system 112 includes an object receiving portion 124 extending from the door 116 and into the interior 104 and configured to support an object. In one example, the object may be one or more personal items of the passenger 108, such a handbag, backpack, purse, grocery bag, clothing, etc. In another example, the object may be the passenger 108 as the object receiving portion 124 may be grasped by the passenger 108 to aid in stabilization during ingress, egress, and operation of the vehicle 100. In the example shown in FIGS. 1A and 1B, the object receiving portion 124 is a generally linear structure that allows the object to hang therefrom. However, the object receiving portion 124 may be configured as a hook, a recess, a projection, a platform, a vessel, etc., for holding the object. It is to be appreciated that the object may be any item configured to be supported by the object receiving portion 124.

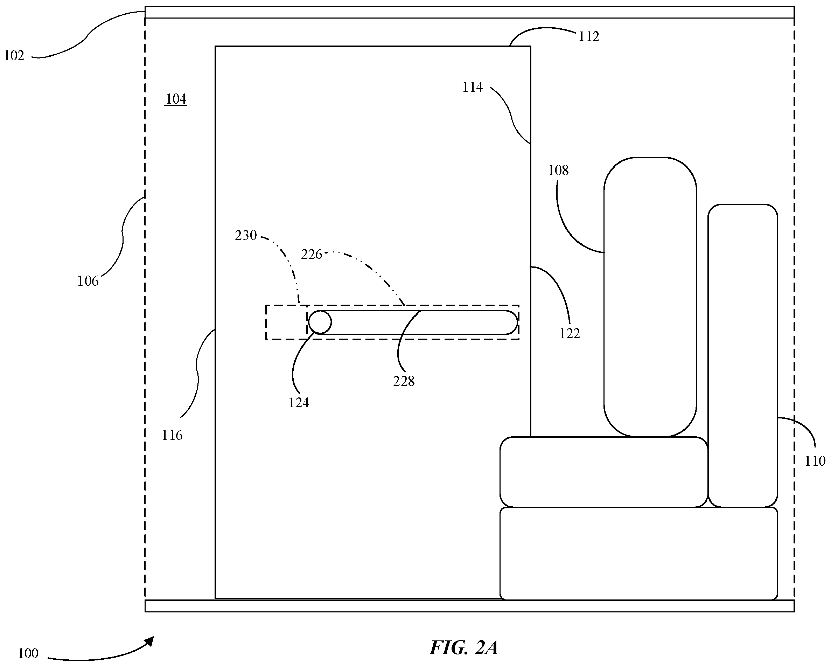

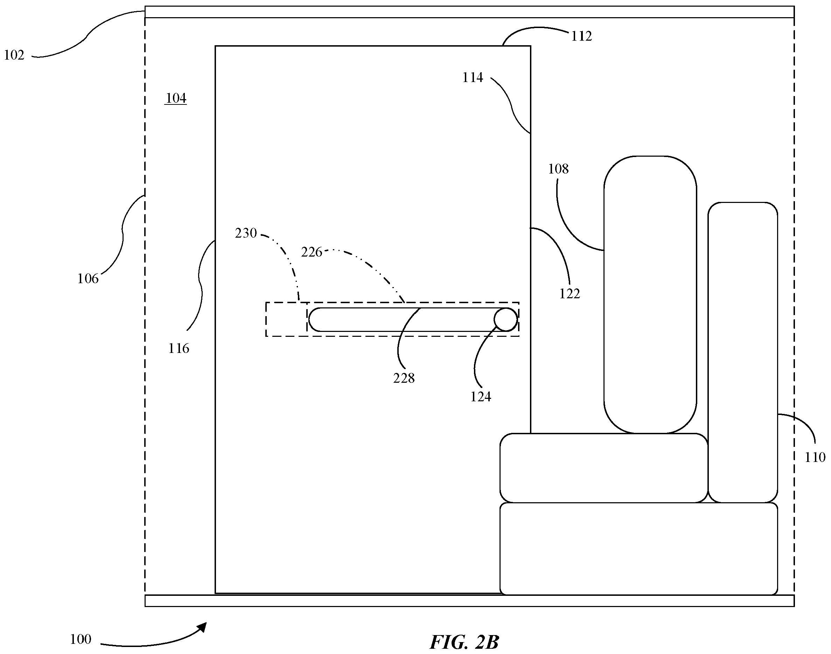

FIGS. 2A and 2B are schematic side view illustrations of an example implementation of the door system 112, in which the object receiving portion 124 is configured to move relative to the interior surface 106 between a first position (as shown in FIG. 2A) and a second position (as shown in FIG. 2B). The movement of the object receiving portion 124 may be utilized to optimize the position of the object. For example, the movement between the first position and the second position may move the object closer to or farther away from the passenger 108 disposed in the seat 110. The object receiving portion 124 may be positioned closer to the seat 110 in the second position than the first position. As such, the object may be more easily accessible to the passenger 108 in the second position than the first position. Therefore, the second position may be associated with accessibility of the object while the first position may be associated with storage of the object. It is to be appreciated that the first position and the second position may be reversed such that the object is more accessible in the first position than the second position.

The object receiving portion 124 is configured to translate relative to the interior surface 106 between the first position and the second position. As shown in FIGS. 2A and 2B, the translation of the object receiving portion 124 is horizontal. However, the translation may be vertical or a combination of both horizontal and vertical translation.

The door 116 includes a rail 226 disposed within the door 116, with the object receiving portion 124 slidably coupled to the rail 226 and configured to translate relative to the interior surface 106. The rail 226 guides the translation of the object receiving portion 124 between the first position and the second position as the object receiving portion 124 slides along the rail 226. The door 116 defines a slot 228 that is open along the interior surface 106. The object receiving portion 124 moves within the slot 228 as the object receiving portion 124 translates between the first position and the second position.

The door system 112 includes an actuator 230 coupled to the object receiving portion 124 and configured to move the object receiving portion 124 between the first position and the second position. The actuator 230 is disposed within the door 116, between the interior surface 106 and the exterior surface 118, and drives the movement of the object receiving portion 124. The actuator 230 may be any component configured to move the object receiving portion 124, including (but not limited to) an electric motor, a servomechanism, a solenoid, a hydraulic actuator, a pneumatic actuator, and a mechanical linkage.

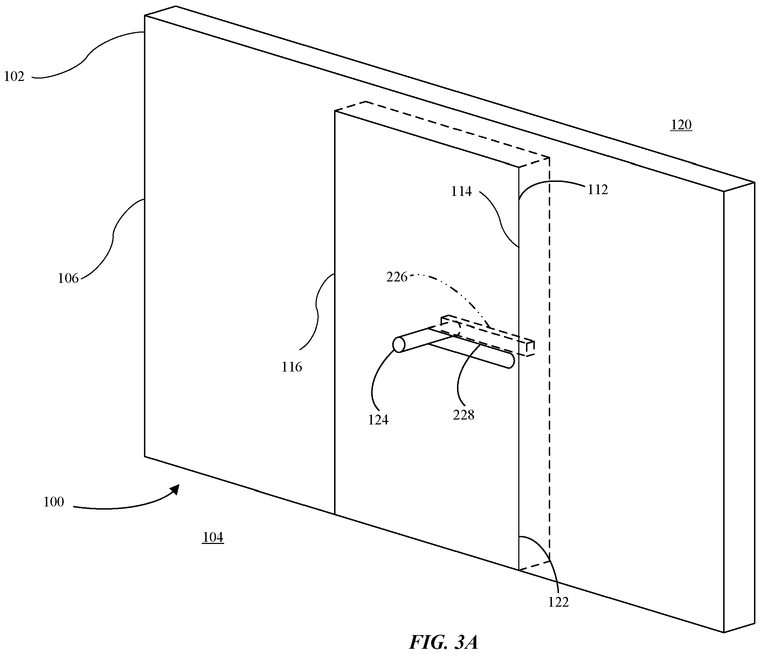

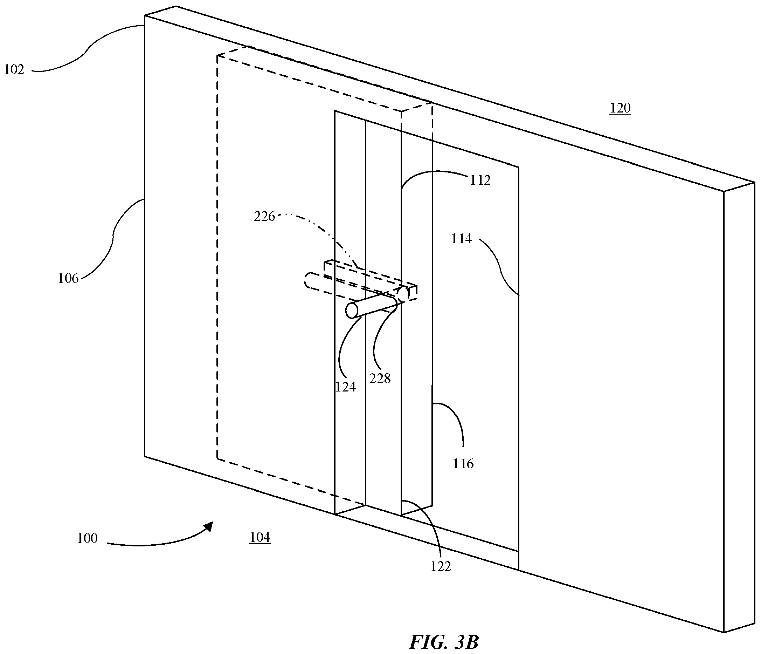

FIGS. 3A and 3B are schematic perspective view illustrations of an example implementation of the door system 112, in which the object receiving portion 124 is configured to move relative to the interior surface 106 between the first position when the door 116 is in the closed position (as shown in FIG. 3A) and the second position when the door 116 is in the open position (as shown in FIG. 3B). The object receiving portion 124 is closer to the lateral surface 122 in the second position than the first position. In addition to optimizing the position of the object receiving portion 124 for accessibility and storage, the movement of the object receiving portion 124 may be utilized to optimize the position of the object receiving portion 124 for ingress and egress from the vehicle 100.

During ingress into the vehicle 100 with door 116 in the open position, the object receiving portion 124 is disposed in the second position. The object receiving portion 124 is adjacent the lateral surface 122 in the second position, which locates the object receiving portion 124 close to the passenger 108 during ingress. The passenger 108 may load the object onto the object receiving portion 124 and then enter the interior 104 through the opening 114 without having to carry the object into the interior 104. The passenger 108 may then facilitate movement of the door 116 from the open position to the closed position. The object receiving portion 124 correspondingly moves from the second position to the first position, which positions the object away from the lateral surface 122 and away from the passenger 108 for storage.

To facilitate egress from the vehicle 100, the door 116 is moved from the closed position to the open position. The object receiving portion 124 correspondingly moves from the first position to the second position, adjacent the lateral surface 122. The passenger 108 may exit the interior 104 of the vehicle 100 through the opening 114. The passenger 108 may then remove the object from the object receiving portion 124, which is disposed within the path of egress from the vehicle 100 in the second position.

The movement of the object receiving portion 124 from the first position when the door 116 is in the closed position to the second position when the door 116 is in the open position also prevents contact between the object receiving portion 124 and the body 102 of the vehicle 100. As described above, the door 116 is configured to slide along the body 102 of the vehicle 100 between the closed position and the open position. If the object receiving portion 124 were to stay in the first position, the object receiving portion 124 would contact the body 102 as the door 116 moved from the closed position to the open position.

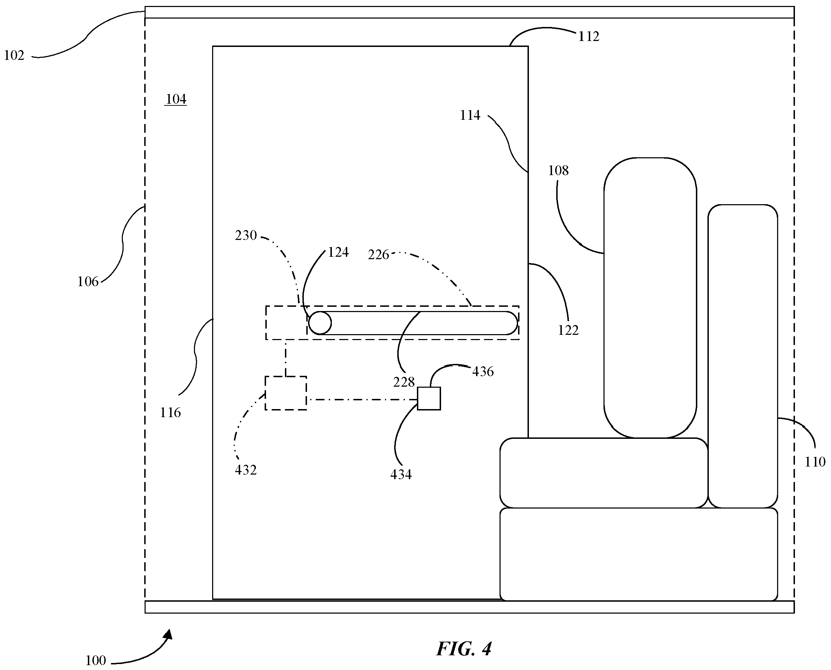

FIG. 4 is a schematic side view illustration of an example implementation of the door system 112, in which the door system 112 further comprises a controller 432 in communication with the actuator 230, and an input 434 in communication with the controller 432. The input 434 is configured to send an input signal to the controller 432. The controller 432 is configured to send an output signal to the actuator 230 to command the actuator 230 to move the object receiving portion 124 between the first position and the second position.

The input 434 includes a selection surface 436 configured to be contacted by the passenger 108 to send the input signal to the controller 432. The selection surface 436 is shown in FIG. 4 as a touch screen, but may be any component configured to be contacted by the passenger 108, such as a button, toggle, lever, knob, etc. The input 434 may be configured to independently move the object receiving portion 124. More specifically, the input 434 may facilitate movement of the object receiving portion 124 independent of the movement of the door 116. The input 434 may be configured to move both the object receiving portion 124 and the door 116. More specifically, when the controller 432 receives the input signal from the input 434, the controller 432 may send the output signal to the actuator 230 and a second output signal to facilitate movement of the door 116.

The door 116 may include a door latch and/or a door actuator in communication with the controller 432. The door latch is configured to selectively couple with the body 102 in the closed position to retain the door 116 in the closed position. The door actuator is configured to drive movement of the door 116 between the closed position and the open position. The door latch and/or the door actuator may receive the second output signal and correspondingly move the door 116 to the closed position or the open position.

The input 434 may be configured to be wirelessly connected to a device, such as a smartphone, a tablet, a personal computer, a remote, etc. More specifically, the input 434 may comprise a wireless receiver configured to receive a wireless signal from the device. The passenger 108 may make a selection with the device to move the object receiving portion 124 between the first position and the second position and send the wireless signal incorporating the selection to the input 434. The input 434 receives the wireless signal and transmits the input signal to the controller 432. The controller 432 sends the output signal to the actuator 230 to move the object receiving portion 124 between the first position and the second position.

The input 434 may be configured to be in communication with another system within the vehicle 100. For example, the input 434 may be coupled to a navigation system of the vehicle 100 that guides the vehicle 100 on a route to a destination. When the vehicle 100 arrives at the destination, the navigation system may communicate with the input 434 that the passenger 108 will be egressing from the vehicle 100. The input 434 sends the input signal to the controller 432 and the controller 432 sends the output signal to the actuator 230, moving the object receiving portion 124 from the first position to the second position to position the object for egress from the vehicle 100.

The input 434 may comprise a detection system, such as a camera, lidar, radar, etc., configured to detect characteristics of the passenger 108 to determine if it is necessary to move the object receiving portion 124 between the first position and the second position. For example, during ingress the detection system may observe the passenger 108 to determine if the passenger 108 is carrying an object that may be supported by the object receiving portion 124. The detection system of the input 434 sends input signals to the controller 432. If the controller 432 determines from the input signals that an object is present that may be supported, the controller 432 will send the output signal to the actuator 230 to move the object receiving portion 124 from the first position to the second position to present the object receiving portion 124 to the passenger 108. Similarly, with the passenger 108 disposed in the interior 104 the detection system may observe the passenger 108 to determine if the passenger 108 is preparing for egress. The detection system of the input 434 sends input signals to the controller 432. If the controller 432 determines from the input signals that the passenger 108 is preparing for egress (such as by unfastening a safety restraint or moving toward the door 116), the controller 432 will send the output signal to the actuator 230 to move the object receiving portion 124 from the first position to the second position.

In this implementation, the controller 432 is dedicated to only the door system 112. However, the controller 432 may be utilized for other systems within the vehicle 100. For example, the controller 432 may be utilized for controlling information and entertainment systems in the vehicle 100, such as radio, climate control, navigation, etc.

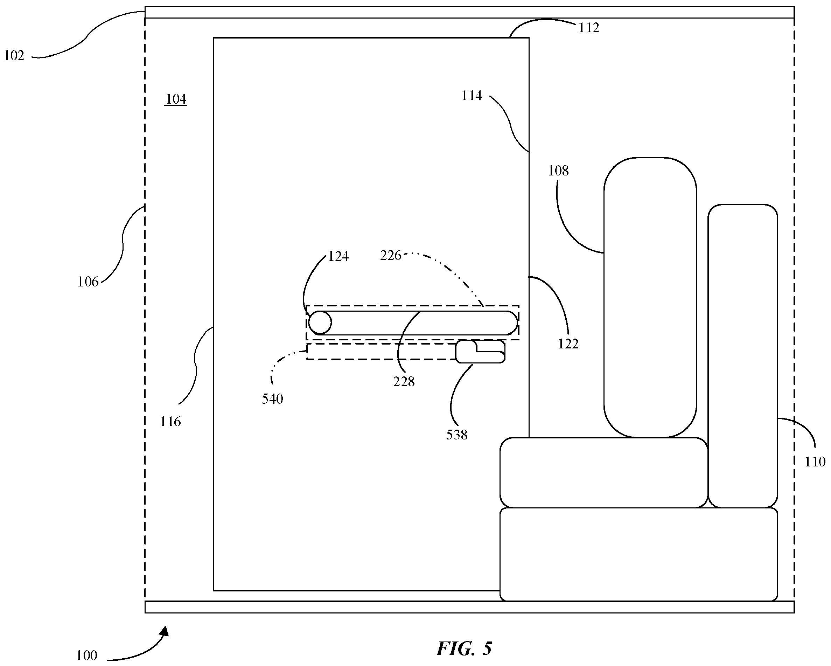

FIG. 5 is a schematic side view illustration of an example implementation of the door system 112, in which the door system 112 comprises a door release 538 configured to be manipulated by the passenger 108 to facilitate movement of the door 116 from the closed position to the open position. The door release 538 is coupled to the object receiving portion 124 and configured to move the object receiving portion 124 from the first position to the second position. More specifically, movement of the door release 538 results in corresponding movement of the object receiving portion 124. The door release 538 in configured as a lever in FIG. 5 to be pivoted by the passenger 108. However, the door release 538 may comprise any movable component, including a button, a toggle, etc. The door 116 includes a motion transfer portion 540 disposed between the door release 538 and the object receiving portion 124 to transfer the motion of the door release 538 to the object receiving portion 124 such that the object receiving portion 124 moves in response to motion of the door release. The motion transfer portion 540 may comprise linkages, a push-pull cable, a pull-pull cable, a Bowden cable, etc. The door release 538 may be coupled to the door latch to facilitate moving the door 116 between the closed position and the open position.

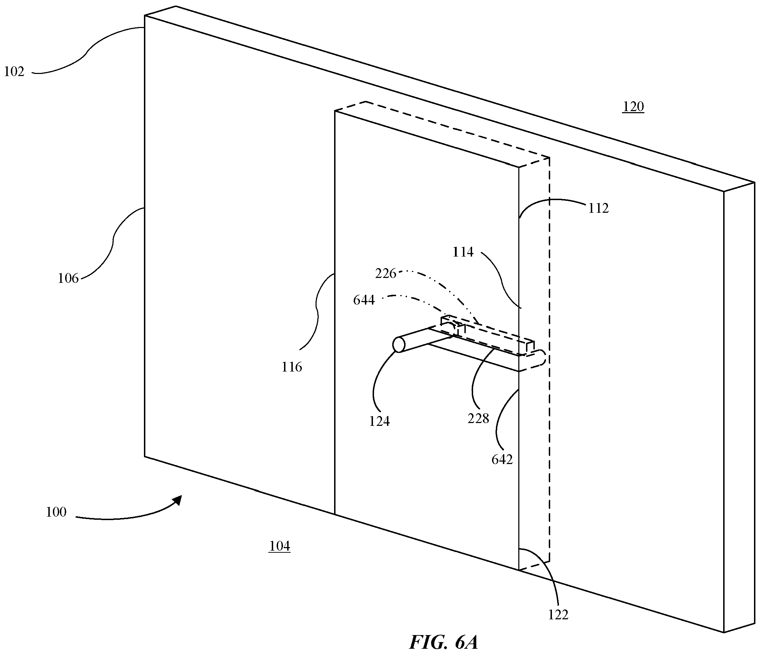

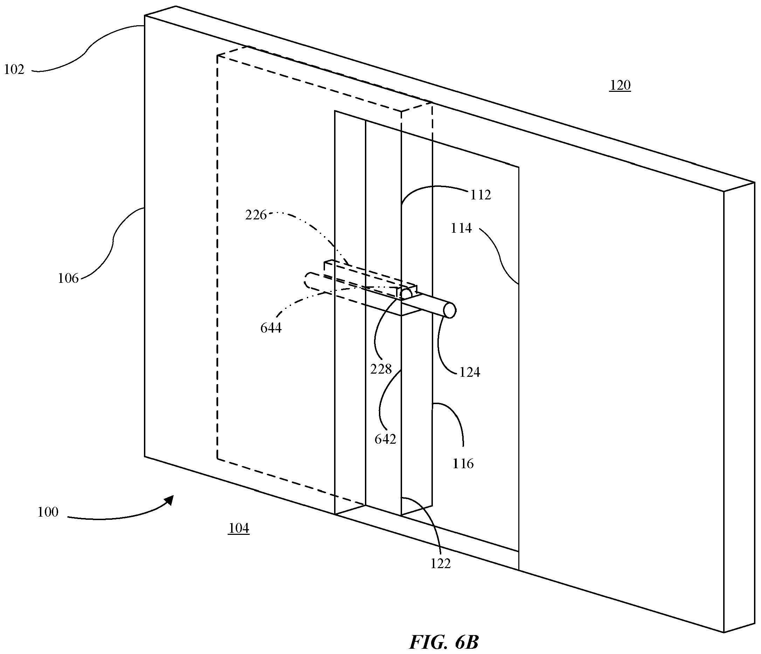

FIGS. 6A and 6B are schematic perspective view illustrations of an example implementation of the door system 112, in which the object receiving portion 124 extends outwardly from the interior surface 106 in the first position and the object receiving portion 124 extends outwardly from the lateral surface 122 in the second position. The object receiving portion 124 is configured to rotate to move the object receiving portion 124 between the interior surface 106 and the lateral surface 122. More specifically, the object receiving portion 124 is configured to translate and rotate between the first position and the second position. The object receiving portion 124 is spaced from the lateral surface 122 in the first position. The object receiving portion 124 is slidably disposed on the track. When moving from the first position to the second position, the object receiving portion 124 is configured to translate relative to the interior surface 106 from the first position toward a corner 642 between the interior surface 106 and the lateral surface 122. The object receiving portion 124 reaches an end of the track adjacent the corner 642 and stops translating. The object receiving portion 124 includes a hinge 644. The object receiving portion 124 is configured to pivot about the hinge 644 relative to the track at the end of the track. The pivoting of the hinge 644 results in the object receiving portion 124 moving around the corner 642 and extending from the lateral surface 122 in the second position.

The movement of the object receiving portion 124 between the first position and the second position corresponds with the movement of the door 116 between the closed position and the open position, respectively. With the door 116 in the open position and the object receiving portion 124 in the second position, the object receiving portion 124 extends into the path through which the passenger 108 travels to ingress/egress the vehicle 100. The object receiving portion 124 is thus presented for use by the passenger 108 to support the object. As described above, during ingress the passenger 108 may load the object onto the object receiving portion 124 and then enter the interior 104 through the opening 114 without having to carry the object into the interior 104. The passenger 108 may then facilitate movement of the door 116 from the open position to the closed position. The object receiving portion 124 correspondingly moves from the second position to the first position, which positions the object away from the lateral surface 122 and away from the passenger 108 for storage.

To facilitate egress from the vehicle 100, the door 116 is moved from the closed position to the open position. The object receiving portion 124 correspondingly moves from the first position to the second position, extending from the lateral surface 122. The passenger 108 may exit the interior 104 of the vehicle 100 through the opening 114. The passenger 108 may then remove the object from the object receiving portion 124, which is disposed within the path of egress from the vehicle 100 in the second position.

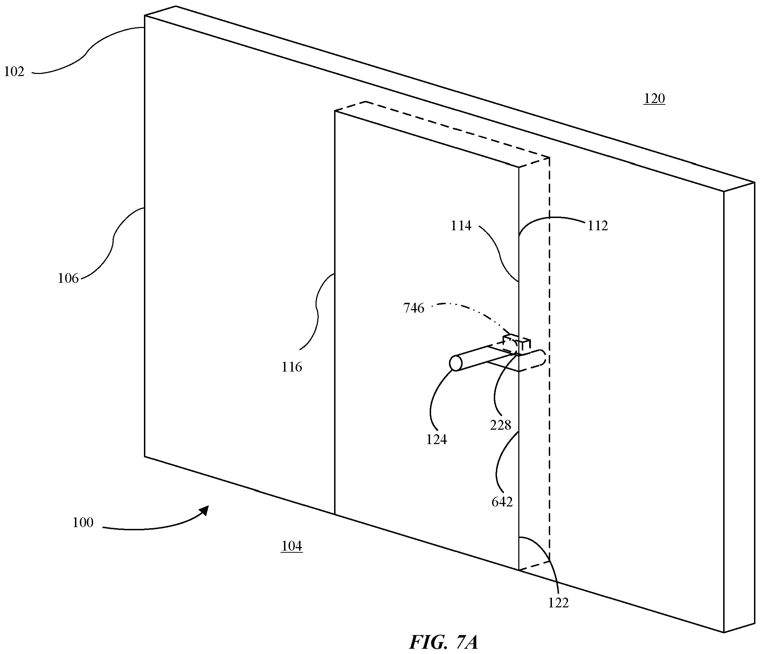

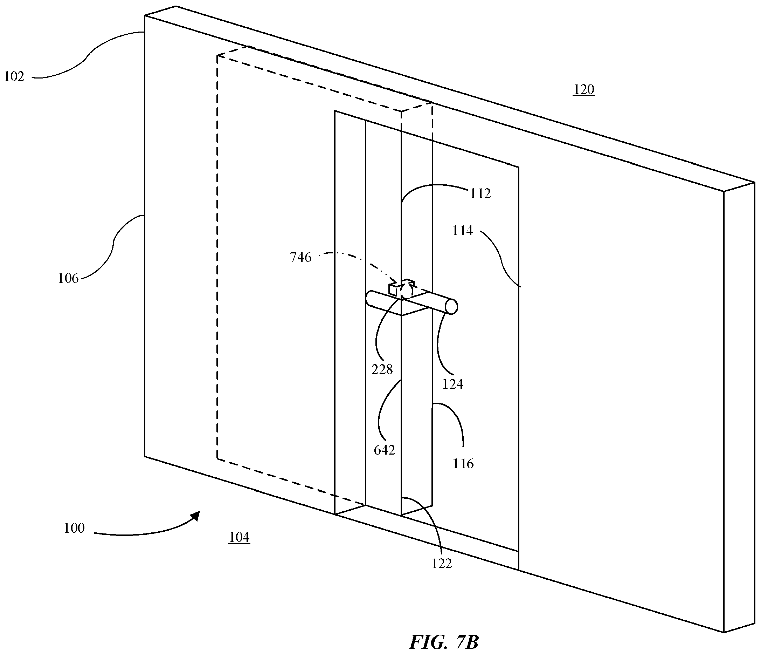

FIGS. 7A and 7B are schematic perspective view illustrations of an example implementation of the door system 112, in which the object receiving portion 124 extends outwardly from the interior surface 106 in the first position and the object receiving portion 124 extends outwardly from the lateral surface 122 in the second position, and the object receiving portion 124 is rotatably coupled to the door 116 at a pivot point 746 between the interior surface 106 and the exterior surface 118. The object receiving portion 124 is configured to pivot about the pivot point 746 as the object receiving portion 124 moves between the first position and the second position. When moving from the first position to the second position, the object receiving portion 124 pivots about the pivot point 746, which results in the object receiving portion 124 moving around the corner 642 and extending from the lateral surface 122 in the second position.

The movement of the object receiving portion 124 between the first position and the second position corresponds with the movement of the door 116 between the closed position and the open position, respectively. With the door 116 in the open position and the object receiving portion 124 in the second position, the object receiving portion 124 extends into the path through which the passenger 108 travels to ingress/egress the vehicle 100. The object receiving portion 124 is thus presented for use by the passenger 108 to support the object. As described above, during ingress the passenger 108 may load the object onto the object receiving portion 124 and then enter the interior 104 through the opening 114 without having to carry the object into the interior 104. The passenger 108 may then facilitate movement of the door 116 from the open position to the closed position. The object receiving portion 124 correspondingly rotates about the pivot point 746 from the second position to the first position, which positions the object away from the lateral surface 122 and away from the passenger 108 for storage.

To facilitate egress from the vehicle 100, the door 116 is moved from the closed position to the open position. The object receiving portion 124 correspondingly pivots about the pivot point 746 from the first position to the second position, extending from the lateral surface 122. The passenger 108 may exit the interior 104 of the vehicle 100 through the opening 114. The passenger 108 may then remove the object from the object receiving portion 124, which is disposed within the path of egress from the vehicle 100 in the second position.

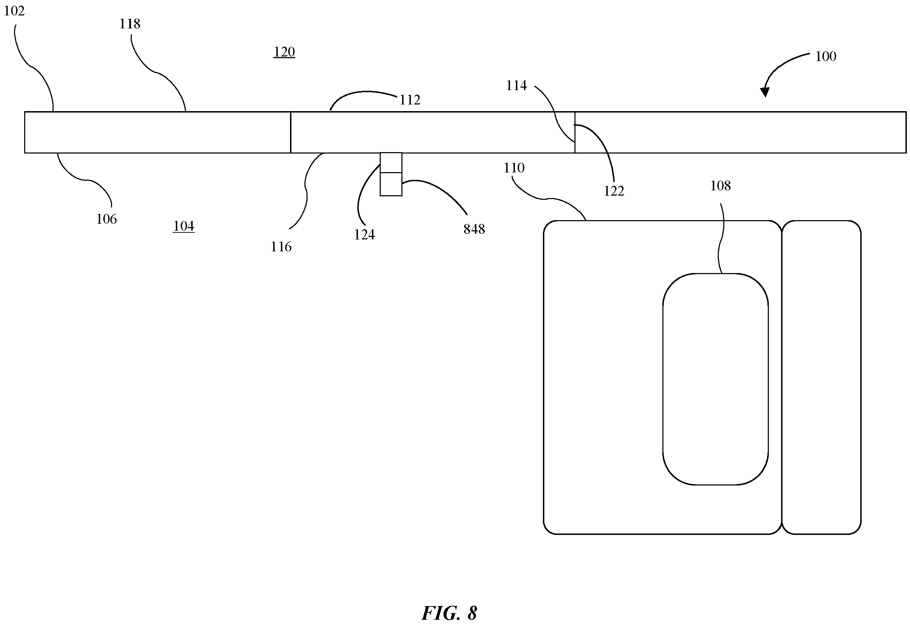

FIG. 8 is a schematic top view illustration of an example implementation of the door system 112, in which the door system 112 further comprises a magnet 848 coupled to the object receiving portion 124 and configured to magnetically retain the object to the object receiving portion 124. The magnet 848 produces a magnetic field about the object receiving portion 124. If the object comprises a ferrous material or a magnet having a polarity opposite that of the magnet 848 of the object receiving portion 124, then the object will be magnetically coupled to the object receiving portion 124. The magnet 848 provides further retention of the object.

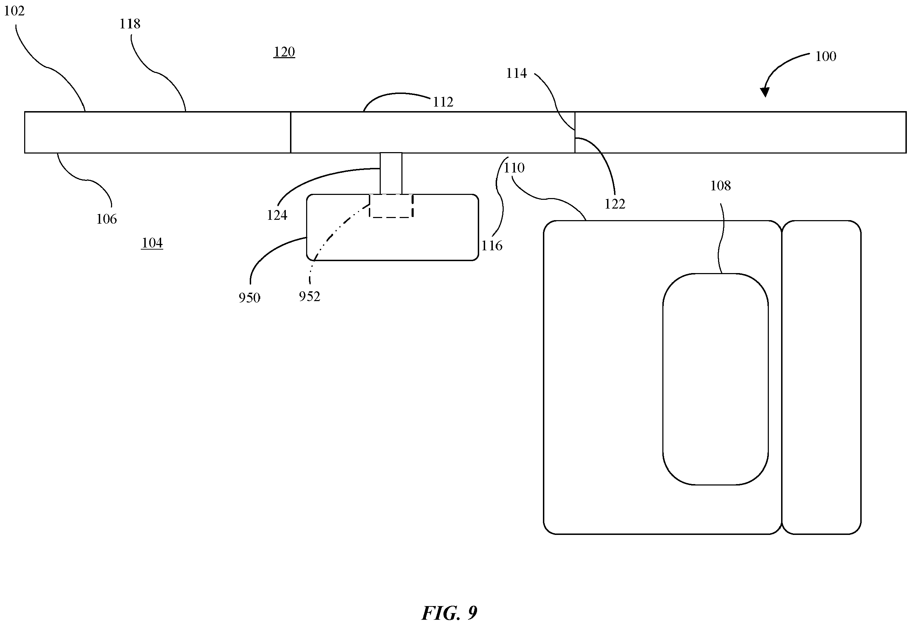

FIG. 9 is a schematic top view illustration of an example implementation of the door system 112, in which the door system 112 further comprises a case 950 comprising a magnet 952 having a first polarity. The object receiving portion 124 comprises a ferrous material or a magnetic material having a second polarity, opposite the first polarity, with the case 950 configured to be magnetically retained to the object receiving portion 124. The case 950 is magnetically coupled to the object receiving portion 124 and thus retained to the object receiving portion 124. The case 950 may be configured to hold the object therein.

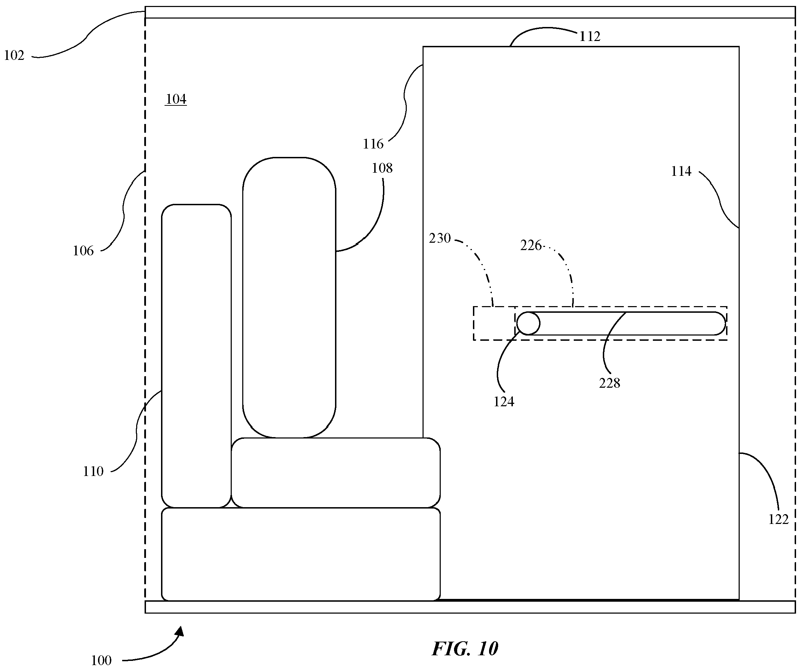

The seat 110 as shown in the previous Figures is positioned in a conventional layout, with the passenger 108 facing a front of the vehicle 100. However, as shown in FIG. 10, the door system 112 described herein may be utilized with the seat 110 positioned in an unconventional layout. FIG. 10 shows the seat 110 positioned such that the passenger 108 faces a rear of the vehicle 100 (opposite the front of the vehicle 100). In this example, the object receiving portion 124 moves between the first position and the second position in any of the ways described in the examples above. It is to be appreciated that that the door system 112 described herein may be applicable to vehicle 100s with any seating arrangement.

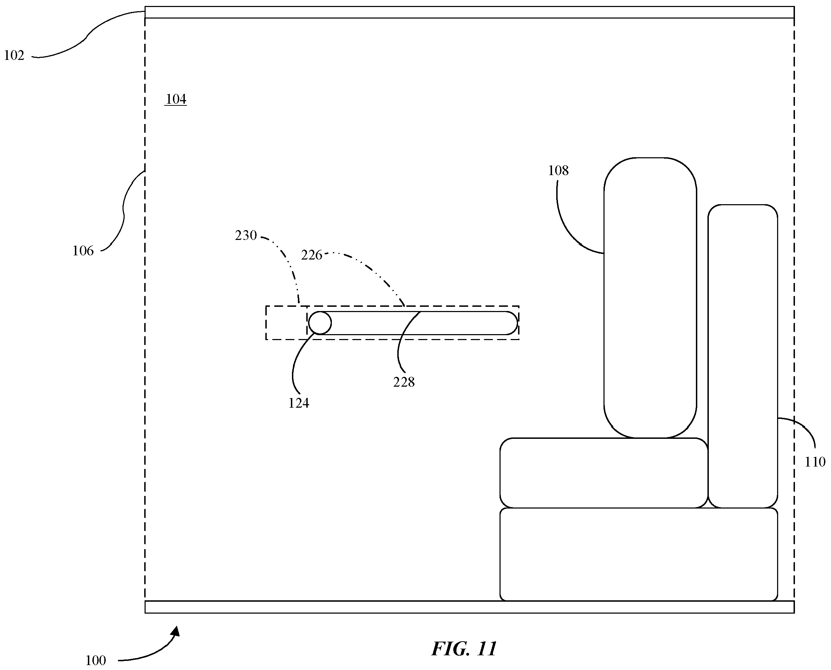

As described above, both the door 116 and the body 102 of the vehicle 100 include the interior surface 106 of the vehicle 100. FIGS. 11 shows an example implementation in which the object receiving portion 124 is movably coupled to the body 102 and extends through the interior surface 106 of the body 102. The object receiving portion 124 is configured to move relative to the interior surface 106 of the body 102 between the first position and the second position in any of the ways described in the examples above.

In the examples described above, the object receiving portion 124 is described to move between the first position and the second position. It is to be appreciated that the object receiving portion 124 may move between and stop at any number positions between and proximate to the first position and the second position. For example, the passenger 108 may adjust the position of the object receiving portion 124 when seated in the interior 104 to comfortably place the object within reach.

In the examples described above, the object receiving portion 124 is shown to continuously extend from the interior surface 106. It is to be appreciated that the object receiving portion 124 may be configured to be disposed within a recess such that the object receiving portion 124 is flush with or beneath the interior surface 106 when not in use. More specifically, the object receiving portion 124 may deploy (e.g., protrude, a cover may reveal a recess, etc.) to receive the object during ingress, egress or at other instances when the occupant desires access to the object but may be flush with or disposed beneath the interior surface 106 at other times (whether or not an object is being received and held by the object receiving portion 124) to provide a homogeneous appearance.

Although the implementations of the vehicle 100 and the door system 112 are shown independently within the Figures, the implementations described above may be utilized in any combination with one another.

The door system 112 may be implemented in the context of a system, such as the vehicle 100, that includes gathering and use of data available from various sources for use in controlling operation of the vehicle 100. As an example, such data may identify the user and include user-specific settings or preferences. The present disclosure contemplates that in some instances, this gathered data may include personal information data that uniquely identifies or can be used to contact or locate a specific person. Such personal information data can include demographic data, location-based data, telephone numbers, email addresses, twitter ID's, home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, a user profile may be established that stores user preference related information that allows operation of the vehicle 100 according to user preferences. Accordingly, use of such personal information data enhances the user's experience.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, the present technology can be configured to allow users to select to "opt in" or "opt out" of participation in the collection of personal information data during registration for services or anytime thereafter. In another example, users can select not to provide data regarding usage of specific applications. In yet another example, users can select to limit the length of time that application usage data is maintained or entirely prohibit the development of an application usage profile. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data at a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, information may be determined each time the system is used, and without subsequently storing the information or associating with the particular user.

Exemplary door systems and vehicles are set out in the following items.
1. A door system for selectively covering an opening of a vehicle, the door system comprising:
   a door configured to move between a closed position, in which the door is configured to be disposed within the opening of the vehicle, and an open position, in which the door is configured to be spaced from the opening of the vehicle, wherein the door comprises:
      an interior surface configured to face an interior of the vehicle in the closed position;
      an exterior surface configured to face an exterior of the vehicle in the closed position; and
      a lateral surface that extends between the interior surface and the exterior surface and spaced from the opening of the vehicle in the open position; and
   an object receiving portion extending from the door and configured to support an object, with the object receiving portion configured to move relative to the interior surface between a first position when the door is in the closed position and a second position when the door is in the open position,
   wherein the object receiving portion is closer to the lateral surface in the second position than the first position.
2. The door system of item 1, wherein the object receiving portion is configured to translate relative to the interior surface between the first position and the second position.
3. The door system of item 2, wherein the door includes a rail disposed within the door, with the object receiving portion slidably coupled to the rail and configured to translate relative to the interior surface.
4. The door system of any of items 1 or 2, wherein the object receiving portion extends outwardly from the interior surface in the first position and the object receiving portion extends outwardly from the lateral surface in the second position.
5. The door system of item 4, wherein the object receiving portion is configured to rotate to move the object receiving portion between the interior surface and the lateral surface.
6. The door system of item 5, wherein the door includes a rail disposed within the door, with the object receiving portion slidably coupled to the rail and configured to translate relative to the interior surface.
7. The door system of item 5, wherein the object receiving portion is rotatably coupled to the door at a pivot point between the interior surface and the exterior surface, with the object receiving portion configured to pivot about the pivot point as the object receiving portion moves between the first position and the second position.
8. The door system of item 5, further comprising an actuator disposed within the door and coupled to the object receiving portion, with the actuator configured to move the object receiving portion between the first position and the second position.
9. The door system of item 8, further comprising a controller in communication with the actuator and an input in communication with the controller, with the input configured to send an input signal to the controller and with the controller configured to send an output signal to the actuator to command the actuator to move the object receiving portion between the first position and the second position.
10. The door system of item 9, wherein the input includes a selection surface configured to be contacted by a passenger to send the input signal to the controller.
11. The door system of any of items 1-7, further comprising a door release configured to be manipulated by a passenger to facilitate movement of the door from the closed position to the open position, with the door release coupled to the object receiving portion and configured to move the object receiving portion from the first position to the second position.
12. The door system of any of items 1-11, further comprising a magnet coupled to the object receiving portion and configured to magnetically retain the object to the object receiving portion.
13. The door system of any of items 1-11, further comprising a case comprising a magnet having a first polarity, wherein the object receiving portion comprises a ferrous material or a magnetic material having a second polarity, opposite the first polarity, with the case configured to be magnetically retained to the object receiving portion.
14. A vehicle comprising:
   a body defining the interior; and
   the door system of item 1, wherein the door is movably coupled to the body.
15. The vehicle of item 15, further comprising a seat mounted to the body within the interior, with the object receiving portion positioned closer to the seat in the second position than the first position.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

## Claims

1. A door system for selectively covering an opening of a vehicle, the door system comprising:
a door configured to move between a closed position, in which the door is configured to be disposed within the opening of the vehicle, and an open position, in which the door is configured to be spaced from the opening of the vehicle, wherein the door comprises:
an interior surface configured to face an interior of the vehicle in the closed position;
an exterior surface configured to face an exterior of the vehicle in the closed position; and
a lateral surface that extends between the interior surface and the exterior surface and spaced from the opening of the vehicle in the open position; and
an object receiving portion extending from the door and configured to support an object, with the object receiving portion configured to move relative to the interior surface between a first position when the door is in the closed position and a second position when the door is in the open position,
wherein the object receiving portion is closer to the lateral surface in the second position than the first position.

2. The door system of claim 1, wherein the object receiving portion is configured to translate relative to the interior surface between the first position and the second position.

3. The door system of claim 2, wherein the door includes a rail disposed within the door, with the object receiving portion slidably coupled to the rail and configured to translate relative to the interior surface.

4. The door system of any of claims 1 or 2, wherein the object receiving portion extends outwardly from the interior surface in the first position and the object receiving portion extends outwardly from the lateral surface in the second position.

5. The door system of claim 4, wherein the object receiving portion is configured to rotate to move the object receiving portion between the interior surface and the lateral surface.

6. The door system of claim 5, wherein the door includes a rail disposed within the door, with the object receiving portion slidably coupled to the rail and configured to translate relative to the interior surface.

7. The door system of claim 5, wherein the object receiving portion is rotatably coupled to the door at a pivot point between the interior surface and the exterior surface, with the object receiving portion configured to pivot about the pivot point as the object receiving portion moves between the first position and the second position.

8. The door system of claim 5, further comprising an actuator disposed within the door and coupled to the object receiving portion, with the actuator configured to move the object receiving portion between the first position and the second position.

9. The door system of claim 8, further comprising a controller in communication with the actuator and an input in communication with the controller, with the input configured to send an input signal to the controller and with the controller configured to send an output signal to the actuator to command the actuator to move the object receiving portion between the first position and the second position.

10. The door system of claim 9, wherein the input includes a selection surface configured to be contacted by a passenger to send the input signal to the controller.

11. The door system of any of claims 1-7, further comprising a door release configured to be manipulated by a passenger to facilitate movement of the door from the closed position to the open position, with the door release coupled to the object receiving portion and configured to move the object receiving portion from the first position to the second position.

12. The door system of any of claims 1-11, further comprising a magnet coupled to the object receiving portion and configured to magnetically retain the object to the object receiving portion.

13. The door system of any of claims 1-11, further comprising a case comprising a magnet having a first polarity, wherein the object receiving portion comprises a ferrous material or a magnetic material having a second polarity, opposite the first polarity, with the case configured to be magnetically retained to the object receiving portion.

14. A vehicle comprising:
a body defining the interior; and
the door system of claim 1, wherein the door is movably coupled to the body.

15. The vehicle of claim 15, further comprising a seat mounted to the body within the interior, with the object receiving portion positioned closer to the seat in the second position than the first position.
